(19) **Europäisches Patentamt**
**European Patent Office**
**Office européen des brevets**

(11) **EP 2 767 931 A2**

(12) **EUROPEAN PATENT APPLICATION**

(43) Date of publication:
**20.08.2014 Bulletin 2014/34**

(51) Int Cl.:
**G06K 9/46** *(2006.01)*

(21) Application number: **14154929.5**

(22) Date of filing: **12.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.02.2013 US 201361765493 P**
**30.12.2013 KR 20130166758**

(71) Applicant: **Samsung Electronics Co., Ltd**
**Gyeonggi-do 443-742 (KR)**

(72) Inventors:
• **Cho, Ik-Hwan**
**443-742 Gyeonggi-do (KR)**

• **Cho, Kyu-Sung**
**443-742 Gyeonggi-do (KR)**
• **Panfilov, Oleksiy Seriovych**
**01032 Kyiv (UA)**
• **Kis, Gennadiy Yaroslavovich**
**01032 Kyiv (UA)**

(74) Representative: **Jenkins, Richard Gavin**
**HGF Limited**
**Saviour House**
**9 St Saviourgate**
**York YO1 8NQ (GB)**

(54) **Electronic device and method of determining descriptor thereof**

(57)    An electronic device and a method of determining brightness gradients of an electronic device are provided. The electronic device includes a memory configured to store a digital image, and a processor configured to process the digital image, wherein the processor is configured to recognize at least one object of the digital image, to determine a descriptor used to recognize the object, to determine the descriptor by using at least one of a location, a direction, and a scale of a feature point on the digital image, to determine brightness gradients of pixels located within an area surrounding the feature point, and to determine the brightness gradients of the pixels based on two or more non-orthogonal fixed directions.

FIG.1

**Description**

**BACKGROUND OF THE INVENTION**

Field of the Invention

The present disclosure relates to an electronic device and a method of determining a descriptor thereof. More particularly, the present disclosure relates to an electronic device and a method of determining a descriptor thereof which may effectively calculate the descriptor used to recognize an object on image data in the electronic device.

Description of the Related Art

Augmented reality is a technology that shows a real-world, viewed by a user with his eyes, overlapped with a virtual object. The augmented reality is also referred to as a Mixed Reality (MR) since augmented reality combines a real-world with a virtual-world having additional information and shows the combination as one image in real time. Although the augmented reality supplementing the real-world with the virtual-world uses a virtual environment generated through computer graphics, a real environment plays a leading role in the augmented reality. The computer graphics serve to additionally provide information required for the real environment. A virtual reality technology makes a user absorbed in the virtual environment so that the user cannot view the real environment. However, the augmented reality technology of mixing the real environment and the virtual object enables the user to view the real environment, thereby providing better reality and additional information.

Accordingly there is a need for an electronic device and a method of determining a descriptor thereof, which may effectively calculate a descriptor used to recognize an object on image data in an electronic device.

The above information is presented as background information only to assist with an understanding of the present disclosure. No determination has been made, and no assertion is made, as to whether any of the above might be applicable as prior art with regard to the present disclosure.

**SUMMARY OF THE INVENTION**

Aspects of the present disclosure are to address at least the above-mentioned problems and/or disadvantages and to provide at least the advantages described below. Accordingly, an aspect of the present disclosure is to provide an apparatus and method for the provision of the augmented reality, feature points on image data may be detected, descriptors may be calculated by using the detected feature points, and an object on the image data may be recognized by using the descriptors. Among technologies of detecting a feature point in image data, a technology of creating a descriptor according to a direction of a gradation has an excellent capability in various applications but diminishes in speed.

Further, among the technologies of detecting the feature point in the image data, a technology of creating a descriptor according to an intensity change may rapidly detect a scale-space but diminishes in speed due to rotation of a patch around a feature point.

In accordance with an aspect of the present disclosure, an electronic device and a method of determining a descriptor thereof, which can effectively calculate a descriptor used to recognize an object on image data in an electronic device is provided.

In accordance with another aspect of the present disclosure, an electronic device is provided. The electronic device includes a memory configured to store a digital image, and a processor configured to process the digital image, wherein the processor is configured to recognize at least one object of the digital image, to determine a descriptor used to recognize the object, to determine the descriptor by using at least one of a location, a direction, and a scale of a feature point on the digital image, to determine brightness gradients of pixels located within an area surrounding the feature point, and to determine the brightness gradients of the pixels based on two or more non-orthogonal fixed directions.

In accordance with another aspect of the present disclosure, a method of determining brightness gradients of an electronic device is provided. The method includes recognizing at least one object on a digital image, and determining a descriptor used to recognize the object, wherein the determining of the descriptor includes determining the descriptor by using at least one of a location, a direction, and a scale of a feature point on the digital image, determining the brightness gradients of pixels located within an area surrounding the feature point, and determining the brightness gradients of the pixels based on two or more non-orthogonal fixed directions.

Other aspects, advantages, and salient features of the disclosure will become apparent to those skilled in the art from the following detailed description, which, taken in conjunction with the annexed drawings, discloses various embodiments of the present disclosure.

## BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a block diagram of an electronic device according to various embodiments of the present disclosure;
FIG. 2 illustrates configurations of an Augmented Reality (AR) system according to various embodiments of the present disclosure;
FIG. 3 is a block diagram of an AR processing unit according to various embodiments of the present disclosure;
FIG. 4 is a flowchart illustrating an operation of calculating a descriptor in an electronic device according to an embodiment of the present disclosure;
FIG. 5 is a flowchart illustrating an operation of calculating a descriptor in an electronic device according to another embodiment of the present disclosure;
FIG. 6 is a view illustrating an area setting operation for a feature point in an electronic device according to various embodiments of the present disclosure;
FIGS. 7A and 7B illustrate non-orthogonal filters, respectively, used to calculate a descriptor in an electronic device according to various embodiments of the present disclosure; and
FIG. 8 is a view illustrating a direction change of a feature point in an electronic device according to various embodiments of the present disclosure.

Throughout the drawings, it should be noted that like reference numbers are used to depict the same or similar elements, features, and structures.

## DETAILED DESCRIPTION OF THE EXEMPLARY EMBODIMENTS

The following description with reference to the accompanying drawings is provided to assist in a comprehensive understanding of various embodiments of the present disclosure by the claims and their equivalents.. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.
The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.
It is to be understood that the singular forms "a," "an," and "the" include plural referents unless the context clearly dictates otherwise. Thus, for example, reference to "a component surface" includes reference to one or more of such surfaces.
An electronic device according to various embodiments of the present disclosure may include a device having a communication function. The electronic device may include a combination of one or more various devices, such as a smart phone, a tablet Personal Computer (PC), a mobile phone, a video phone, an e-book reader, a desktop PC, a laptop PC, a net-book computer, a Personal Digital Assistant (PDA), a Portable Multimedia Player (PMP), an MP3 player, a mobile medical device, an electronic bracelet, an electronic necklace, an electronic appcessory, a camera, a wearable device, an electronic clock, a wrist watch, a home appliance (e.g., a refrigerator, an air-conditioner, a cleaner, an oven, a microwave oven, a washing machine, an air cleaner, and the like), an artificial intelligence robot, a Television (TV), a Digital Video Disk (DVD) player, an audio, various medical devices(e.g., a Magnetic Resonance Angiography (MRA), a Magnetic Resonance Imaging (MRI), a Computed Tomography (CT), a movie camera, an ultra sonic device, and the like), a navigation device, a Global Positioning System (GPS) receiver, an Event Data Recorder (EDR), a Flight Data Recorder (FDR), a set-top box, a TV box (e.g., a Samsung HomeSyncTM, an Apple TVTM, or a Google TVTM), an electronic dictionary, a vehicle infotainment device, electronic equipment for a ship(e.g., navigation equipment for a ship, a gyrocompass, and the like), an avionics, security equipment, an electronic clothing, an electronic key, a camcorder, a game consoles, a Head-Mounted Display (HMD), a flat panel display device, an electronic picture frame, an electronic album, furniture or a part of a building or structure including a communication function, an electronic board, an electronic signature receiving device, a Wearable device or a projector, and the like. It is obvious to those skilled in the art that the electronic device according to the various embodiments of the present disclosure is not limited the aforementioned devices.

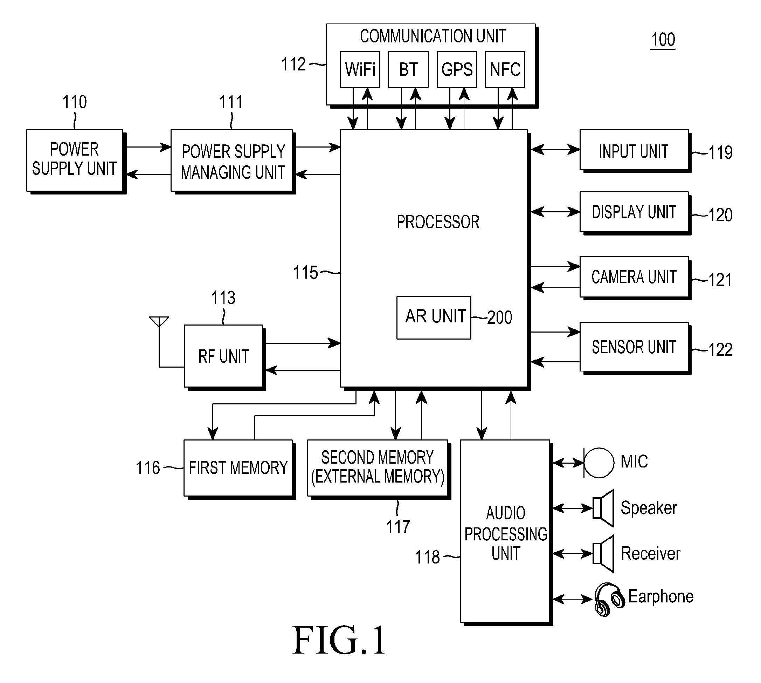

FIG. 1 is a block diagram of an electronic device 100 according to various embodiments of the present disclosure.

Referring to FIG. 1, a power supply unit 110 may supply electrical power to one battery or a plurality of batteries (not illustrated) arranged in a housing of the electronic device 100 under control of a power supply managing unit 111. The one battery or the plurality of batteries (not illustrated) may supply power to the electronic device 100. Further, the power supply unit 110 may supply, to the electronic device 100, electrical power input from an external power source (not illustrated) through a wired cable connected to a connector of the electronic device 100. In addition, the power supplier 110 may also supply power wirelessly input from the external power source through a wireless charging technology to the electronic device 100.

The power supply managing unit 111 may supply power from the power supply unit 110 to the electronic device 100 or supply the power input from the external power source to the power supply unit 110 under control of a processor 115.

A communication unit 112 may allow the electronic device 100 to connect with an external device through mobile communication by using at least one antenna or a plurality of antennas under the control of the processor 115.

The communication unit 112 may include at least one of a wireless Local Area Network (LAN) unit and a short distance communication unit. For example, the communication unit may include only the wireless LAN unit or only the short distance communication unit. Alternatively, the communication unit may include both the wireless LAN unit and the short distance communication unit. The wireless LAN unit may access the Internet in a place where a wireless Access Point (AP) (not illustrated) is installed, under the control of the processor 115. The wireless LAN unit may support a wireless LAN protocol (IEEE 802.11x) of the Institute of Electrical and Electronics Engineers (IEEE). The short distance communication unit may wirelessly make short distance communication under the control of the processor 115. A short distance communication scheme may include Bluetooth, Infrared Data Association (IrDA) communication, WiFi-Direct communication, Near Field Communication (NFC) and the like.

The communication unit 112 may include a GPS unit, and the GPS unit may receive an electronic wave from a plurality of GPS satellites (not illustrated) in Earth's orbit and may calculate a location of the electronic device 100 by using time of arrival from the GPS satellites (not illustrated) to the electronic device 100. A Radio Frequency (RF) unit 113 may transmit and receive a wireless signal for a voice call, a video call, a text message (SMS), or a Multimedia Message (MMS) to and from a portable phone (not illustrated), a smart phone (not illustrated, a tablet PC, or other devices (not illustrated) of which the phone number is input to the electronic device 100.

A processor 115 may include a Central Processing Unit (CPU), a Graphics Processing Unit (GPU), a Read Only Memory (ROM) storing a control program for control of the electronic device 100, and a Random Access Memory (RAM) used as a storage area for storing a signal or data input from the outside of the electronic device 100 or for work performed in the electronic device 100. The CPU may include a single core, a dual core, a triple core, or a quadruple core. The CPU, the RAM and the ROM may be connected with each other through internal buses.

The processor 115 may control the power supply unit 110, the power supply managing unit 111, the communication unit 112, the RF unit 113, a first memory 116, a second memory 117, an audio processing unit 118, an input unit 119, a display unit 120, a camera unit 121, and a sensor unit 122.

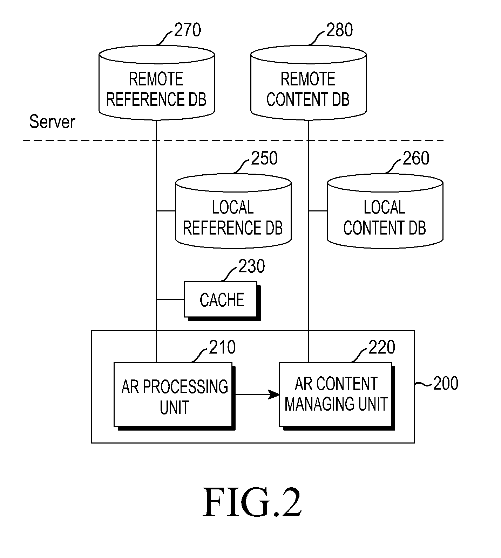

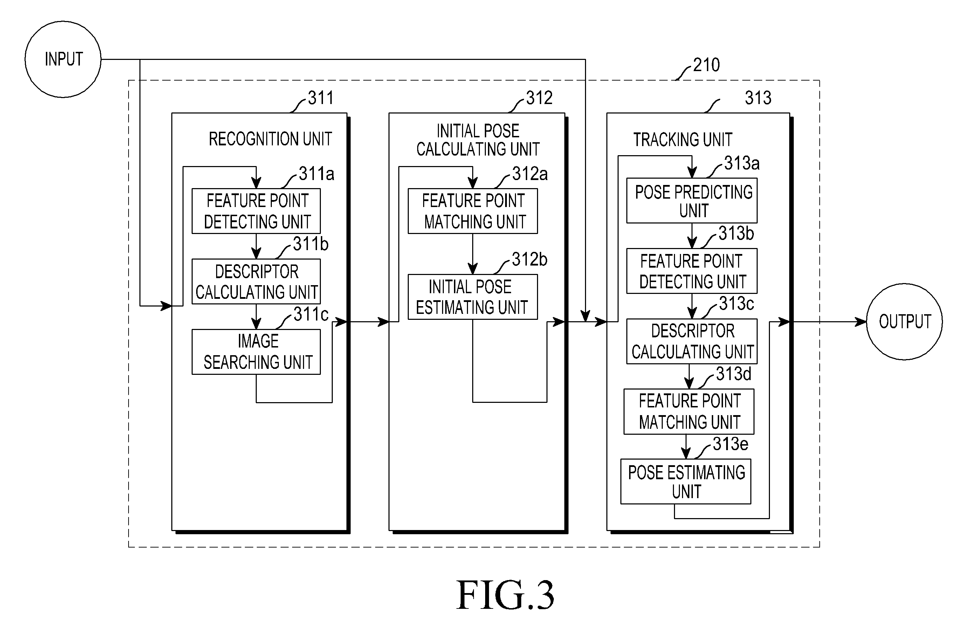

The processor 115 may include an Augmented Reality (AR) unit 200 that can process input data to provide the processed data as augmented reality data. On the other hand, the AR unit 200 may be separately configured without being included in the processor 115. Configurations of the AR unit will be described below in detail with reference to FIGS. 2 and 3.

The processor 115 may process image data stored in the first memory 116 into three dimensional (3D) image data that can be shown in an augmented reality mode, according to the various embodiments of the present disclosure.

The processor 115 may be configured to recognize at least one object on a digital image and may determine a descriptor that will be used for the recognition of the object, according to the various embodiments of the present disclosure.

The processor 115 may determine the descriptor by using at least one of a location, a direction, and/or a scale of a feature point on the image in order to determine the descriptor to be used for the recognition of the object.

The processor 115 may determine brightness gradients of pixels located within an area surrounding the feature point in order to determine the descriptor to be used for the recognition of the object. The processor 115 may determine the brightness gradients of the pixels based on two or more non-orthogonal fixed directions different from a direction of the feature point. The processor 115 may convert the brightness gradients determined based on the fixed directions, according to the direction of the feature point.

The processor 115 sets the area surrounding the feature point. The area surrounding the feature point includes areas divided based on the direction of the feature point and an orthogonal direction thereto, and the divided areas may overlap each other at boundaries thereof.

The processor 115 may add up positive values and may add up negative values along a first direction for the converted brightness gradients of the pixels included in at least one portion of the area surrounding the feature point, and may add up the positive values and may add up the negative values along a second direction for the converted brightness gradients. An angle between the first direction and the second direction may correspond to an angle between the fixed directions.

The processor 115 may use at least one pair of filters to determine the brightness gradients of the pixels. A relative location of the filters may be determined at least partially based on an angle $\alpha$ or $\beta$ between one of the fixed directions and a vertical or horizontal direction.

According to various embodiments of the present disclosure, the processor 115 may set the area surrounding the feature point and may divide the area into a plurality of sub-areas in view of the direction of the feature point in order to determine the descriptor. The processor 115 may apply two filters having a fixed direction non-orthogonal to the direction of the feature point to pixels of each sub-area to detect d1 values and d2 values output through the respective two filters. The processor 115 may convert the d1 values and the d2 values to d1' values and d2' values, respectively, coinciding with the direction of the feature point.

The processor 115 may calculate sums of positive numbers for the d1 values and the d2 values, respectively, and sums of negative numbers for the d1 values and the d2 values, respectively, for the pixels of each of the plurality of sub-areas. The processor 115 may create a vector including the sums of the positive numbers and the sums of the negative numbers for each of the plurality of sub-areas.

Further, the processor 115 may calculate a sum of d1' values and a sum of d2' values for the pixels of each of the plurality of sub-areas, and create a vector by using the sum of d1' values and the sum of the d2' values for each sub-area.

The processor 115 may determine the brightness gradients of the pixels located within the area surrounding the feature point by using a plurality of vectors of the respective plurality of sub-areas.

The first memory 116 may store signals or data which is input and output to correspond to an operation of the communication unit 112, the RF unit 113, the input unit 119, the camera unit 121, the sensor unit 122, and the display unit 120 used as a touch screen unit, under the control of the processor 115. The first memory 116 may store a control program for control of the electronic device 100 or the processor 115, and applications. The first memory 116 may store digital image data.

The second memory 117 is an external memory that may be inserted into or withdrawn from the electronic device 100, and may store signals or data which is input and output to correspond to an operation of the communication unit 112, the RF unit 113, the input unit 119, the camera unit 121, the sensor unit 122, and the display unit 120 used as a touch screen unit, under the control of the processor 115. The audio processing unit 118 may include a transmitter that encodes and modulates transmitted signals and a receiver that demodulates and decodes received signals, and may be configured with MODEM and CODEC. The CODEC may include data CODEC for processing packet data and audio CODEC for processing audio signals including as a voice. The audio processing unit 118 may output received audio signals output from the audio CODEC to a speaker or earphones connected to the electronic device, or may transmit transmitted audio signals generated from a microphone or the receiver to the processor 115 through the audio CODEC.

The input unit 119 may include a touch input by a user and a touch input through a touch pen. Each of the touch input and touch pen are input to the display unit used as a touch screen unit.

The input unit 119 may receive a key input from a user for control of the electronic device 100. The input unit 119 may include a physical keypad (not illustrated) formed in the electronic device 100 or a virtual keypad (not illustrated) displayed on the display unit 120 which may be used as a touch screen unit. The physical keypad (not illustrated) formed in the electronic device 100 may be excluded according to a capability or a structure of the electronic device 100.

The display unit 120 may use a Liquid Crystal Display (LCD), in which case the display unit 120 may include an LCD controller, a memory that may store image data, an LCD display element, and the like. When the LCD is implemented in a touch screen type, the display unit may also operate as the input unit and a virtual keypad may be displayed on the display unit 120. Further, in a case where the display unit 120 is implemented in the touch screen type and thus, is used as the touch screen unit, the touch screen unit is configured with a Touch Screen Panel (TSP) including a plurality of sensor panels, and the plurality of sensor panels may include a capacitive sensor panel capable of recognizing a hand touch and an electromagnetic induction type sensor panel capable of detecting a detailed touch such as a touch pen.

The camera unit 121 is an image generating device, and may include at least one of first and second cameras photographing a still image or a moving image under the control of the processor. Further, the first camera or the second camera may include an auxiliary light source (e.g., a flash (not illustrated)) providing light required for photographing. The first camera is arranged on a front surface of the electronic device 100, and the second camera is arranged on a rear surface of the electronic device. In a different way, the first and second cameras are arranged adjacent to each other (e.g., an interval between the first camera and the second camera is larger than 1cm or smaller than 8cm) to photograph a 3D still image or a 3D moving image.

The sensor unit 122 may include at least one sensor detecting a state of the electronic device 100. For example, the sensor unit 122 may include a proximity sensor for detecting whether a user approaches the electronic device 100, an illumination sensor (not illustrated) for detecting an amount of ambient light of the electronic device 100, a motion sensor (not illustrated) for detecting an operation (e.g., rotation of the electronic device 100, or acceleration or vibration applied to the electronic device 100) of the electronic device 100, a geo-magnetic sensor (not illustrated) for detecting a point of the compass by using the Earth's magnetic field, a gravity sensor for detecting an action direction of the gravity, and an altimeter for detecting altitude by measuring atmospheric pressure. At least one sensor may detect the state, generate a signal corresponding to the detection, and transmit the generated signal to the processor 115. The sensors of the sensor unit 122 may be added or omitted according to the capability of the electronic device 100.

FIG. 2 illustrates configurations of an Augmented Reality (AR) system according to various embodiments of the present disclosure.

Referring to FIG. 2, the system may include an AR unit 200 including an AR processing unit 210 and an AR content managing unit 220.

The AR processing unit 210 as a main unit of the system may receive input data from at least one of a camera unit, a media unit, an audio unit, and a sensor unit, which are included in the electronic device 100. The AR processing unit 210 may use another configuration of the electronic device 100, namely, a memory, a CPU, or a GPU for AR processing of the input data. The AR processing unit 210 may process the input data by using a cache 230 storing reference data, a local reference DataBase (DB) 250, or a remote reference DB 270 for recognition of a target from the input data, and may output processing result data for the input data to the AR content managing unit 220.

The AR processing unit 210 may process image data received from the camera unit 121, image data and audio data of a moving image received from the media unit, and audio data received from the audio unit into data for augmented reality. The AR processing unit 210 may change the electronic device 100 to an augmented reality mode by detecting a motion of the electronic device 100, or may generate a vibration while outputting image data and audio data in the augmented reality mode, according to a type of sensor data received from the sensor unit 122.

The processing result data for the input data may include recognition information and local information for a target of the input data. The local information may be used to determine a two dimensional and/or three dimensional pose when the target corresponds to image data, and the recognition information may be used to determine a type of the target.

The AR content managing unit 220 may detect content corresponding to the processing result data for the input data from a local content DB 260 or a remote content DB 280 based on the processing result data for the input data received from the AR processing unit 210, and may configure and output the video and audio output data based on the detected content.

In the various embodiments of the present disclosure, a case in which the AR processing unit provides input image data received through the camera unit as an augmented reality image data may be described as an example.

FIG. 3 is a block diagram of an AR processing unit according to various embodiments of the present disclosure.

Referring to FIG. 3, the AR processing unit 210 may include a recognition unit 311, an initial pose calculating unit 312, and a tracking unit 313. Input image data may be output to the recognition unit 311 or the tracking unit 313, and the recognition unit 311 or the tracking unit 313 may be performed in parallel.

The recognition unit 311 may identify a type of an object on the input image data at least partially based on reference image data. The recognition 311 may use reference image data stored in an internal storage device or an external storage device of the electronic device 100 for recognition of the object. For example, face recognition may need an external reference face database for recognition of faces different from authenticated faces. Meanwhile, a Quick Response (QR) code may have internal reference data of the electronic device since the QR code generally needs only some specific rules for recognition of the QR code in a database and does not have to be dynamically updated in common cases.

The recognition unit 311 may include a feature point detecting unit 311a, a descriptor calculating unit 311b, and an image searching unit 311c.

The feature point detecting unit 311a may detect feature points from input image data when the input image data is received from the camera unit 121. The feature point detecting unit 311a may transmit the detected feature points to the descriptor calculating unit 311b.

The descriptor calculating unit 311b may calculate and generate descriptors by using the detected feature points received from the feature point detecting unit 311a and may transmit the generated descriptors to the image searching unit 311c.

The descriptor calculating unit 311b may be configured to recognize at least one object on the digital image and may determine the descriptors that will be used for the recognition of the object, according to the various embodiments of the present disclosure.

The descriptor calculating unit 311b may determine the descriptors by using at least one of a location, a direction, and/or a scale of the feature points on the image in order to determine the descriptors to be used for the recognition of the object. The descriptor calculating unit 311b may determine brightness gradients of pixels located within an area around each feature point in order to determine the corresponding descriptor to be used for the recognition of the object. The descriptor calculating unit 311b may determine the brightness gradients of the pixels based on two or more non-orthogonal fixed directions different from a direction of the feature point. The descriptor calculating unit 311b may convert the brightness gradients determined based on the fixed directions, according to the direction of the feature point.

The descriptor calculating unit 311b sets the area surrounding the feature point. The area surrounding the feature point includes areas divided based on the direction of the feature point and an orthogonal direction thereto, and the divided areas may overlap each other at boundaries thereof.

The descriptor calculating unit 311b may add up positive values and may add up negative values along a first direction for the converted brightness gradients of the pixels included in at least one portion of the area surrounding the feature point, and may add up the positive values and may add up the negative values along a second direction for the converted brightness gradients. An angle between the first direction and the second direction may correspond to an angle between the fixed directions.

The descriptor calculating unit 311b may use at least one pair of filters in order to determine the brightness gradients of the pixels. A relative location of the filters may be determined at least partially based on an angle $\alpha$ or $\beta$ between one of the fixed directions and a vertical or horizontal direction.

According to the various embodiment of the present disclosure, the descriptor calculating unit 311b may set the area surrounding the feature point and divide the area into a plurality of sub-areas in view of the direction of the feature point in order to determine the descriptor. The descriptor calculating unit 311b may apply two filters having a fixed direction non-orthogonal to the direction of the feature point to pixels of each of the sub-areas to detect values of d1 and values of d2 output through each of the two filters. The descriptor calculating unit 311b may convert the values of d1 and the values of d2 to values of d1' and values of d2', respectively, coinciding with the direction of the feature point.

The descriptor calculating unit 311b may calculate sums of positive numbers for the d1 values and the d2 values, respectively, and sums of negative numbers for the d1 values and the d2 values, respectively, for the pixels of each of the plurality of sub-areas. The descriptor calculating unit 311b may create a vector including the sums of the positive numbers and the sums of the negative numbers for each of the sub-areas in the plurality of sub-areas.

Further, the descriptor calculating unit 311b may calculate a sum of d1' values and a sum of d2' values for the pixels of each of the plurality of sub-areas, and create a vector by using the sum of d1' values and the sum of the d2' values for each sub-area.

The descriptor calculating unit 311b may determine the brightness gradients of the pixels located within the area surrounding the feature point by using a plurality of vectors of the respective plurality of sub-areas.

The image detecting unit 311c may detect reference image data corresponding to the input image data in a local reference DB 250 or a remote reference DB 270 by using the calculated descriptors received from the descriptor calculating unit 311b, and may recognize an object on the input image data through at least one detected reference image data.

The initial pose calculating unit 412 may calculate an initial pose for the object identified through the detection of the feature points in the input image data.

The initial pose calculating unit 312 may include a feature point matching unit 312a and an initial pose estimating unit 312b.

The feature point matching unit 312a may perform a matching operation for the feature points by using the calculated descriptors received from the recognition unit 311, and may transmit matching information on the feature points to the initial pose estimating unit 312b.

The initial pose estimating unit 312b may estimate an initial pose for the object of the input image data through the matching information for the feature points received from the feature point matching unit 312a.

The tracking unit 313 may dynamically track a pose change for the object in at least one input image data sequentially received through the camera unit 121.

The tracking unit 313 may acquire, from the initial pose calculating unit 312, initial information through which the initial pose for the object of the input image data may be estimated, continuously track the object in each of the sequentially received input image data, and dynamically calculate a pose change for the object. The tracking unit 313 may output recognition information representing a type of the object and local information representing a pose of the object in each of the sequentially received input image data.

The tracking unit 313 may include a pose predicting unit 313a, a feature point detecting unit 313b, a descriptor calculating unit 313c, a feature point matching unit 313d, and a pose estimating unit 313e.

The pose predicting unit 313a may predict a pose for an object on a next input image data through an estimated pose of the object in at least one input image data having been previously input.

The feature point detecting unit 313b may detect feature points in the input image data sequentially received after the estimation of the initial pose for the object of the input image data, and may transmit the detected feature points to the descriptor calculating unit 313c.

The descriptor calculating unit 313c may calculate descriptors by using the feature points of the input image data received from the feature point detecting unit 313b, and may transmit the calculated descriptors to the feature point matching unit 313d. The feature point matching unit 313d may perform a matching operation on the feature points by using the calculated descriptors received from the descriptor calculating unit 313c, and may transmit matching information for the feature points to the pose estimating unit 313e.

The pose estimating unit 313e may dynamically estimate a pose change for the object in at least one sequentially received input image data by using the matching information on the feature points received from the feature point matching unit 313d, and may output recognition information representing a type of the object and local information representing the pose of the object on each of the input image data.

Although the AR unit included in the processor performs the AR processing in the electronic device according to the various embodiments of the present disclosure, the processor may perform the same function as that of the AR unit.

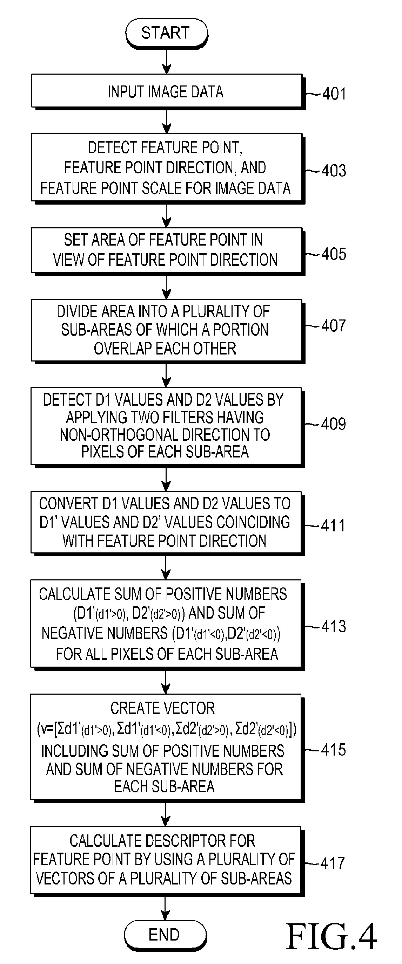

An operation of calculating descriptors in the aforementioned electronic device will be described below in detail with reference to FIGS. 4 to 8.

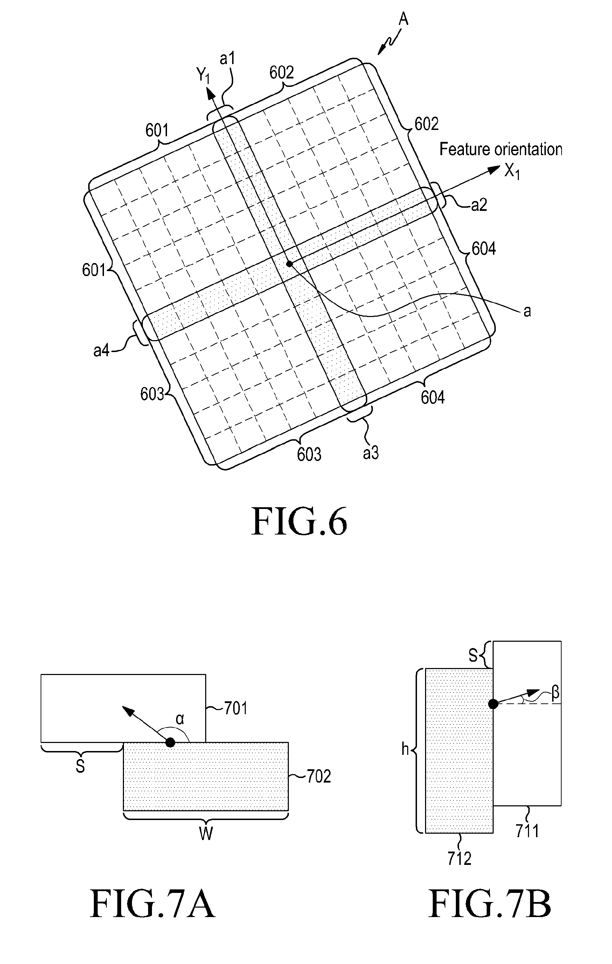

FIG. 4 is a flowchart illustrating an operation of calculating a descriptor in an electronic device according to an embodiment of the present disclosure, FIG. 6 is a view illustrating an area setting operation for a feature point in an electronic device according to various embodiments of the present disclosure, FIGS. 7A and 7B illustrate non-orthogonal filters, respectively, used to calculate a descriptor in an electronic device according to various embodiments of the present disclosure, and

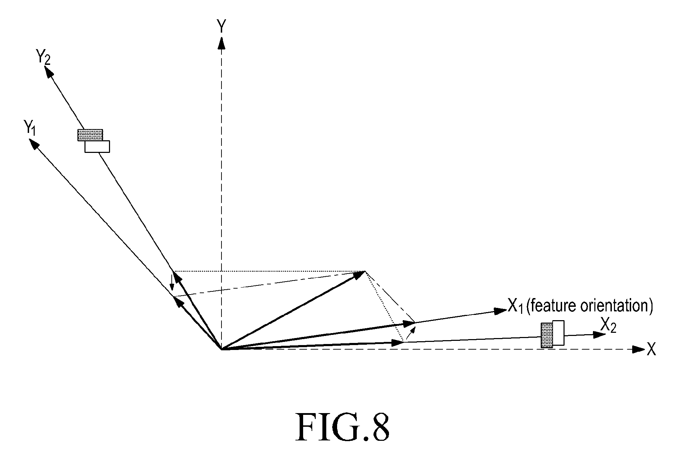

FIG. 8 is a view illustrating a direction change of a feature point in an electronic device according to various embodiments of the present disclosure.

Hereinafter, various embodiments of the present disclosure will be described in detail with reference to FIGS. 4 and 6 to 8 together with FIGS. 1 to 3.

Referring to FIG. 4, when an electronic device 100 changes to an augmented reality mode and image data is input from a camera unit 121 in operation 401, a feature point detecting unit 311a of a recognition unit 311 may detect at least one of feature points on the input image data, a direction of the feature points, and a scale of the feature points, in operation 403.

When at least one of the direction and the scale for the feature points is detected in operation 403, a descriptor calculating unit 311b of the recognition unit 311 may set an area surrounding each feature point in view of the direction of the feature point in operation 405.

In operation 407, the descriptor calculating unit 311b may divide the area set around the feature point into a plurality of sub-areas based on the direction of the feature point and a direction orthogonal to the direction of the feature point. The descriptor calculating unit 311b may make the plurality of sub-areas overlap each other at their boundaries when dividing the area set around the feature point into the plurality of sub-areas.

In describing operations 405 and 407 with reference to FIG. 6, the descriptor calculating unit 331b may set an area A surrounding a feature point (a), divide the area A into a plurality of sub-areas 601 to 604 based on a direction $X_1$ of the feature point and a direction $Y_1$ orthogonal to the direction of the feature point, and make the plurality of sub-areas 601 to 604 overlap each other at their boundaries a1 to a4, as illustrated in FIG. 6.

In operation 409 of FIG. 4, the descriptor calculating unit 311b may apply two filters having a fixed direction non-orthogonal to the direction of the feature point, for example, a first filter for a Y-axis slope and a second filter for an X-axis slope to pixels of each of the plurality of sub-areas and may detect d1 values and d2 values output from the respective two filters.

In describing the first filter with reference to FIG. 7A, the first filter for the Y-axis slope may include a plus (+) filter 701 and a minus (-) filter 702, and any of the plus (+) filter 701 and the minus (-) filter 702 may move according to the non-orthogonal direction of the first filter.

A movement distance S by which any of the plus (+) filter 701 and the minus (-) filter 702 may move according to the non-orthogonal direction of the first filter may be calculated by Equation 1 as follows.

$$S = \frac{w}{2} \, ctg \, \alpha$$

$$\ldots \ldots \text{Equation } 1$$

where, w denotes a width of a filter, and $\alpha$ denotes an angle between a fixed direction and a vertical direction.

In describing the second filter with reference to FIG. 7B, the second filter for the X-axis slope may include a plus (+) filter 711 and a minus (-) filter 712, and any of the plus (+) filter 711 and the minus (-) filter 712 may move according to the non-orthogonal direction of the second filter.

A movement distance S by which any of the plus (+) filter 711 and the minus (-) filter 712 may move according to the non-orthogonal direction of the second filter may be calculated by Equation 2 as follows.

$$S = \frac{h}{2} \, ctg\beta$$

........ Equation 2

where, h denotes a height of a filter, and $\beta$ denotes an angle between a fixed direction and a horizontal direction.

As illustrated in FIGS. 7A and 7B, a relative location of at least one pair of filters, for example, the first filter and the second filter may be determined at least partially based on the angle ($\alpha$ or $\beta$) between one of the fixed directions and the vertical or horizontal direction.

In operation 411 of FIG. 4, the descriptor calculating unit 311b may convert the d1 values and the d2 values output from the respective two filters to d1' values and d2' values coinciding with the direction of the feature point.

In describing operation 411 with reference to FIG. 8, when the direction $(X_1, Y_1)$ of the feature point is detected, the descriptor calculating unit 311b may apply the two filters to the pixels of the area set around the feature point, while moving the two filters in a fixed direction $(X_2, Y_2)$ of the respective two filters non-orthogonal to the direction $(X_1, Y_1)$ of the feature point. When the d1 values and the d2 values are detected through the two filters, respectively, according to the application of the two filters, the descriptor calculating unit 311b may convert the detected d1 and d2 values to the d1' values and the d2' values, respectively, which coincide with the direction $(X_1, Y_1)$ of the feature point.

In operation 413 of FIG. 4, the descriptor calculating unit 311b may calculate sums $(d1'_{d1>0}, d2'_{d2'>0})$ of positive numbers for the d1' values and the d2' values, respectively, and sums $(d1'_{d1'<0}, d2'_{d2'<0})$ of negative numbers for the d1' values and the d2' values, respectively, for the pixels of each of the plurality of sub-areas. In operation 415, the descriptor calculating unit 311b may create a vector including the sums of the positive numbers and the sums of the negative numbers for each of the plurality of sub-areas as follows.

$$v = \left[ \sum d1'_{(d1'>0)}, \ \sum d1'_{(d1'<0)}, \ \sum d2'_{(d2'>0)}, \ \sum d2'_{(d2'<0)} \right]$$

d1': a value obtained by converting the d1 value detected from the first filter for the Y-axis slope for coincidence with the direction of the feature point

d2': a value obtained by converting the d2 value detected from the second filter for the X-axis slope for coincidence with the direction of the feature point

In operation 417, the descriptor calculating unit 311b may calculate and determine the descriptor for the feature point by using a plurality of vectors of the respective plurality of sub-areas.

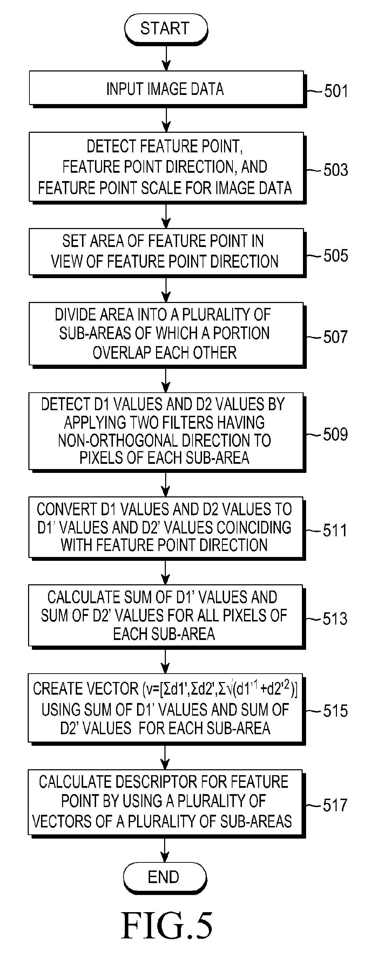

FIG. 5 is a flowchart illustrating an operation of calculating a descriptor in an electronic device according to another embodiment of the present disclosure. Hereinafter, various embodiments of the present disclosure will be described in detail with reference to FIG. 5 together with FIGS. 1 to 3.

Referring to FIG. 5, operations 501, 503, 505, 507, 509 and 511 are identical to operations 401, 403, 405, 407, 409 and 411 of FIG. 4 respectively, and thus, descriptions thereof will be omitted.

In operation 513, the descriptor calculating unit 311b may calculate a sum of d1' values and a sum of d2' values for pixels of each of the plurality of sub-areas.

In operation 515, the descriptor calculating unit 311b may calculate a vector by using the sum of the d1' values and the sum of the d2' values for the sub-area as follows.

$$v = \left[ \sum d1', \ \sum d2', \ \sum \sqrt{(d1'^2 + d2'^2)} \right]$$

d1': a value obtained by converting the d1 value detected from the first filter for the Y-axis slope for coincidence with the direction of the feature point

d2': a value obtained by converting the d2 value detected from the second filter for the X-axis slope for coincidence with the direction of the feature point

In operation 517 is identical to operation 417 of FIG. 4 and thus, a description thereof will be omitted.

Through operations of FIGS. 4 and 5, the descriptor calculating unit 311b may determine the brightness gradients of the pixels for the area surrounding the feature point, by using the two filters having the fixed direction non-orthogonal to the direction of the feature point. The descriptor calculating unit 311b may calculate the descriptor required for recognizing one or more objects on the input image data by using the brightness gradients of the pixels.

The electronic device and the descriptor determining method of the electronic device according to the various embodiments of the present disclosure may be implemented as a computer readable code in a computer readable recording medium. The computer-readable recording medium includes all the types of recording devices in which data readable by a computer system are stored. As for such a recording medium, for example, a ROM, a RAM, an optical disc, a magnetic tape, a floppy disc, a hard disc, or a non-volatile memory may be used.

While the present disclosure has been shown and described with reference to various embodiments thereof, it will be understood by those skilled in the art that various changes in form and details may be made therein without departing from the spirit and scope of the present disclosure as defined by the appended claims and their equivalents.

**Claims**

1.   An electronic device comprising:

a memory configured to store a digital image; and
a processor configured to process the digital image,
wherein the processor is configured to recognize at least one object of the digital image, to determine a descriptor used to recognize the object, to determine the descriptor by using at least one of a location, a direction, and a scale of a feature point on the digital image, to determine brightness gradients of pixels located within an area surrounding the feature point, and to determine the brightness gradients of the pixels based on two or more non-orthogonal fixed directions.

2.   The electronic device of claim 1, wherein the processor is configured to convert the brightness gradients determined based on fixed directions according to the direction of the feature point.

3.   The electronic device of claim 2, wherein the processor is configured to add up positive values and add up negative values along a first direction of the converted brightness gradients of the pixels contained in at least one portion of the area surrounding the feature point, and to add up positive values and add up negative values along a second direction of the converted brightness gradients, and an angle between the first direction and the second direction corresponds to an angle between the fixed directions.

4.   The electronic device of claim 1, wherein the processor is configured to set the area surrounding the feature point, the area surrounding the feature point comprises areas divided on a basis of the direction of the feature point and an orthogonal direction of the feature point, and the divided areas overlap each other at boundaries of the divided areas.

5.   The electronic device of claim 1, wherein the processor is configured to use at least one pair of filters to determine the brightness gradients of the pixels, and a relative location of the filters is determined at least partially based on one of an angle $\alpha$ and an angle $\beta$ between one of the fixed directions and one of a vertical direction and a horizontal direction.

6.   The electronic device of claim 1, wherein the fixed directions are different from the direction of the feature point.

7.   The electronic device of claim 1, wherein the processor is configured to set the area surrounding the feature point, to divide the area into a plurality of sub-areas, to detect d1 values and d2 values output through two filters, respectively, by applying the two filters having a fixed direction non-orthogonal to the direction of the feature point to pixels of each sub-area, to convert the d1 values and the d2 values to d1' values and d2' values coinciding with the direction of the feature point, to calculate sums of positive numbers of the d1' values and the d2' values, respectively, and sums of negative numbers of the d1' values and the d2' values, respectively, of the pixels of the sub-area, to create a vector comprising the sums of the positive numbers and the sums of the negative values of the sub-area, and to determine the brightness gradients of the pixels located within the area surrounding the feature point by using a plurality of vectors of the respective plurality of sub-areas.

8.   A method of determining brightness gradients of an electronic device, the method comprising:

recognizing at least one object on a digital image;

determining a descriptor used to recognize the object,
wherein the determining of the descriptor comprises:

determining the descriptor by using at least one of a location, a direction, and a scale of a feature point on the digital image;
determining the brightness gradients of pixels located within an area surrounding the feature point; and
determining the brightness gradients of the pixels based on two or more non-orthogonal fixed directions.

9. The method of claim 8, wherein the determining of the descriptor further comprises:

converting the brightness gradients determined based on the fixed directions according to the direction of the feature point.

10. The method of claim 9, further comprising:

adding up positive values and adding up negative values along a first direction of the converted brightness gradients of the pixels contained in at least one portion of the area surrounding the feature point; and
adding up positive values and adding up negative values along a second direction of the converted brightness gradients,
wherein an angle between the first direction and the second direction corresponds to an angle between the fixed directions.

11. The method of claim 8, wherein the determining of the descriptor comprises:

setting the area surrounding the feature point,
wherein the area surrounding the feature point comprises areas divided on a basis of the direction of the feature point and an orthogonal direction of the feature point, and the divided areas overlap each other at boundaries of the divided areas.

12. The method of claim 8, wherein the determining of the descriptor comprises:

determining the brightness gradients of the pixels by using at least one pair of filters,
wherein a relative location of the filters is determined at least partially based on one of an angle $\alpha$ and an angle $\beta$ between one of the fixed directions and one of a vertical direction and a horizontal direction.

13. The method of claim 8, wherein the fixed directions are different from the direction of the feature point.

14. The method of claim 8, wherein the determining of the descriptor comprises:

setting the area surrounding the feature point;
dividing the area into a plurality of sub-areas;
applying the two filters having a fixed direction non-orthogonal to the direction of the feature point to pixels of each sub-area;
detecting d1 values and d2 values output through two filters, respectively;
converting the d1 values and the d2 values to d1' values and d2' values coinciding with the direction of the feature point;
calculating sums of positive numbers of the d1' values and the d2' values, respectively, and sums of negative numbers of the d1' values and the d2' values, respectively, of the pixels of the sub-area;
creating a vector comprising the sums of the positive numbers and the sums of the negative values of the sub-area; and
determining the brightness gradients of the pixels located within the area surrounding the feature point by using a plurality of vectors of the respective plurality of sub-areas.

15. A non-transitory computer-readable medium with a computer program recorded thereon, the computer program executed by a processor to perform the method of claim 8.

100

COMMUNICATION UNIT
WiFi  BT  GPS  NFC
112

111
POWER SUPPLY MANAGING UNIT

110
POWER SUPPLY UNIT

PROCESSOR

AR UNIT — 200

115

113
RF UNIT

116
FIRST MEMORY

117
SECOND MEMORY (EXTERNAL MEMORY)

118
AUDIO PROCESSING UNIT

MIC
Speaker
Receiver
Earphone

INPUT UNIT — 119
DISPLAY UNIT — 120
CAMERA UNIT — 121
SENSOR UNIT — 122

FIG.1

FIG.2

FIG.3

START

INPUT IMAGE DATA ⎯401

DETECT FEATURE POINT,
FEATURE POINT DIRECTION, AND
FEATURE POINT SCALE FOR IMAGE DATA ⎯403

SET AREA OF FEATURE POINT IN
VIEW OF FEATURE POINT DIRECTION ⎯405

DIVIDE AREA INTO A PLURALITY OF
SUB-AREAS OF WHICH A PORTION
OVERLAP EACH OTHER ⎯407

DETECT D1 VALUES AND D2 VALUES BY
APPLYING TWO FILTERS HAVING
NON-ORTHOGONAL DIRECTION TO
PIXELS OF EACH SUB-AREA ⎯409

CONVERT D1 VALUES AND D2 VALUES TO
D1' VALUES AND D2' VALUES COINCIDING
WITH FEATURE POINT DIRECTION ⎯411

CALCULATE SUM OF POSITIVE NUMBERS
$(D1'_{(d1'>0)}, D2'_{(d2'>0)})$ AND SUM OF
NEGATIVE NUMBERS $(D1'_{(d1'<0)}, D2'_{(d2'<0)})$
FOR ALL PIXELS OF EACH SUB-AREA ⎯413

CREATE VECTOR
$(v=[\Sigma d1'_{(d1'>0)}, \Sigma d1'_{(d1'<0)}, \Sigma d2'_{(d2'>0)}, \Sigma d2'_{(d2'<0)}])$
INCLUDING SUM OF POSITIVE NUMBERS
AND SUM OF NEGATIVE NUMBERS FOR
EACH SUB-AREA ⎯415

CALCULATE DESCRIPTOR FOR
FEATURE POINT BY USING A PLURALITY OF
VECTORS OF A PLURALITY OF SUB-AREAS ⎯417

END

FIG.4

START

INPUT IMAGE DATA ~501

DETECT FEATURE POINT,
FEATURE POINT DIRECTION, AND
FEATURE POINT SCALE FOR IMAGE DATA ~503

SET AREA OF FEATURE POINT IN
VIEW OF FEATURE POINT DIRECTION ~505

DIVIDE AREA INTO A PLURALITY OF
SUB-AREAS OF WHICH A PORTION
OVERLAP EACH OTHER ~507

DETECT D1 VALUES AND D2 VALUES BY
APPLYING TWO FILTERS HAVING
NON-ORTHOGONAL DIRECTION TO
PIXELS OF EACH SUB-AREA ~509

CONVERT D1 VALUES AND D2 VALUES TO
D1' VALUES AND D2' VALUES COINCIDING
WITH FEATURE POINT DIRECTION ~511

CALCULATE SUM OF D1' VALUES AND
SUM OF D2' VALUES FOR ALL PIXELS OF
EACH SUB-AREA ~513

CREATE VECTOR $(v=[\Sigma d1', \Sigma d2', \Sigma \sqrt{(d1'^1+d2'^2)}])$
USING SUM OF D1' VALUES AND SUM OF
D2' VALUES FOR EACH SUB-AREA ~515

CALCULATE DESCRIPTOR FOR FEATURE
POINT BY USING A PLURALITY OF
VECTORS OF A PLURALITY OF SUB-AREAS ~517

END

# FIG.5

FIG.6

FIG.7A

FIG.7B

FIG.8